Europäisches Patentamt

European Patent Office

Office européen des brevets

(11) Publication number: **0 168 854**
**A1**

(12) # EUROPEAN PATENT APPLICATION

(21) Application number: **85200893.7**

(22) Date of filing: **06.06.85**

(51) Int. Cl.⁴: **C 08 G 69/20,** C 08 G 69/18

(30) Priority: **09.06.84 NL 8401843**

(43) Date of publication of application: **22.01.86**
**Bulletin 86/4**

(84) Designated Contracting States: **BE CH DE FR GB IT LI**
**NL**

(71) Applicant: **STAMICARBON B.V., LICENSING**
**SUBSIDIARY OF DSM Postbus 53, NL-6160 AB Geleen**
**(NL)**

(72) Inventor: **Bongers, Jozef Johannes Maria, Pastoor**
**Tissenstraat 6, NL-6181 HV Elsloo (L) (NL)**
Inventor: **Van Geenen, Albert Arnold,**
**Merkelbeekerstraat 82, NL-6441 KM Brunssum (NL)**

(74) Representative: **van Leeuwen, Hendrik Bernardus et al,**
**Octroolbureau DSM Postbus 9, NL-6160 MA Geleen (NL)**

(54) **Process for the manufacture of a polyamide.**

(57) Process for preparing polyamide by anionically poly-
merizing lactam in the presence of an alkaline metal cata-
lyst, an activator and at least one low molecular weight
ester compound. The polymerization process is rapid and
yields polyamides having good impact strengths. The pro-
cess significantly reduces moulding time in reaction injec-
tion moulding.

1                                                  AE 3557

## PROCESS FOR THE MANUFACTURE OF A POLYAMIDE

The invention relates to a process for the manufacture of a polyamide through anionically catalyzed polymerization of lactam in the presence of a alkaline metal catalyst and an activator.

Such a process is known from U.S. Patent 3.304.291. According to that process, lactams may be polymerized by means of an alkali or alkaline earth metal catalyst and another compound which activates the alkaline-catalyzed polymerization of lactam. According to that U.S. patent, the derivatives of urea, thio-urea and guanidine are particularly suitable as activator. An example of such a compound is lactam-blocked 1.6-hexamethylene diisocyanate.

The non-prepublished Dutch Patent Application No. 8302928 describes a process for the polymerization of lactam in the presence of an alkaline metal catalyst and a polymer activator which may be obtained by reacting a high-molecular polyol with a lactam-blocked diisocyanate. According to that application, products are obtained that possess high impact strength.

U.S. Patent 3.862.262 describes the preparation of nylon block copolymers in the presence of a metal compound and a condensation product of an acyl-bis-lactam, and a polyol.

British Patent 1.067.153 describes the application of the reaction product of polypropylene glycol, and 2,4-toluene diisocyanate as accelerator for the anionically catalyzed polymerization of lactam.

Experiments by the Applicant have shown that the anionically catalyzed polymerization of lactam in reaction injection moulding, particularly if an alkaline earth metal initiator is applied in combination with an isocyanate-based activator, does yield products with good impact strength but that the reaction rate is not altogether satisfactory.

The purpose of the invention is to provide a catalyst activator system enabling lactams to be polymerized rapidly into products with good impact strength.

According to the invention, a process for the manufacture of a polyamide through anionically catalyzed polymerization of lactam in the presence of an alkaline metal catalyst and an activator is characterized in that the polymerization is carried out in the presence of a low molecular ester compound.

The use of an ester compound as co-activator or co-catalyst in the polymerization has, surprisingly, proved to accelerate the polymerization significantly, without adversely affecting the mechanical properties of the end product. This is particularly important with RIM nylon, where lactam is polymerized into the end product in the mould.

In this context it is noted that the polymerization of lactam in the presence of an estered polyol compound is known from Dutch Patent Application 7507298 open for public inspection. In that process, the estered polyol serves as activator whilst in the process according to the present invention an activator must be present besides the ester compound. As will appear from a number of comparative examples, the effect according to the invention does not arise if an ester compound is employed without a separate activator.

The process according to the invention is practised at the temperatures that are usual for anionic lactam polymerization i.e. between about 90 and about 300 °C, more specifically between 120 and 180 °C. The pressure at which the polymerization takes place is not of critical importance; the polymerization must in any case be carried out at pressure at which the reactants are in the liquid phase. Costomary pressures range between 1 and 50 bar. The pressure will often not be higher than 10 to 15 bar, one of the advatanges of RIM nylon over RIM polyurethane being the comparatively low pressures that may be applied.

The process according to the invention may be applied for the purpose of polymerizing all known lactams such as 2-pyrrolidone, 2-piperidone, caprolactam or lauryllactam, or a mixture of two or more lactams. Preferably, caprolactam is applied since this yields a polyamide with superior physical properties. Moreover, the reaction velocity of caprolactam is high. Preferably, a reaction system is applied which leads to the formation of nylon 6 homopolymers, nylon 6 random copolymers or nylon 6 block polymers.

As pointed out earlier, the lactam polymerization takes place in the presence of an anionic polymerization catalyst and an activator. The anionic polymerization catalyst may be any of the known catalysts, such as sodium lactamate, potassium lactamate or a compound such as bromomagnesium lactamate. Mixtures of catalysts may be used also.

Numerous activators are suitable for the polymerizaiton of lactam according to the present invention. The activator, occasionally also referred to as promotor, may preferably be chosen from the group of lactam-ended isocyanates (which encompasses also the group of lactam-ended polyurethanes) and acyl lactam compounds. A number of these compounds are known in themselves and described in, inter alia, United States Patent 3.304.291 referred to in the preamble or in the European Patents 67.693, 67.694 or 67.695 open for public inspection. The non-prepublished Dutch Patent Application No. 8302929 describes a process for the manufacture of a lactam-ended polymer isocyanate activator.

A high molecular activator is preferred for application in RIM nylon technology. That activator is in general a reaction product of an organic hydroxy compound such as a polyfunctional hydroxy compound (polyol) with at least 2 hydroxyl groups per molecule and a compound which yields activator groups. In general, the known polyols may be used. The polyol may with advantage be a polyether polyol, polyester polyol, polybutadiene polyol, a siloxane-containing polyol and/or a so-called 'polymer' polyol. The 'polymer polyols' as herein defined comprise grafted polymers obtained by grafting one or more ethylenic unsaturated polymers onto a polyether polyol as well as the polyurea dispersions in polyols. These polyurea dispersions may be obtained by dissolving a diamine or hydrazine together with a stoichiometric amount of diisocyanate in a polyol and allowing the solution so obtained to react so as to obtain a polyurea compound disperged in the polyol.

The polyols described above substantially possess a high molecular weight. The equivalent weight of these polyols should preferably be at least 300, more specifivally between 1000 and 2500. Optimal properties of the end product are achieved within these limits, viz. a high impact strength in combination with a high flexural modulus.

It is pointed out that the molecular weight, or equivalent weight, as used in this context, relates to the number average weight. The term equivalent weight of a polyol relates to the number average weight of a polyol per hydroxyl group, that is, the molecular weight divided by the functionality.

As indicated above, the polyol is reacted with a compound which yields activator groups, preferably with a lactam-ended diisocyanate, which comprises also the lactam-blocked polyurethane. The lactam-blocked diisocyanate may be obtained by reacting lactam with a diisocyanate, for instance hexamethylene diisocyanate, isophorone diisocyanate, toluene diisocyanate, methylene-bis(phenyl isocyanate), MDI and hydrogenated MDI or modified MDI such as the carbodiimide-modified MDI (Isonate-143 L, Upjohn Company, or Mondur PF, Mobay Chemical Company), and diol-extended prepolymers of MDI. Other suitable diisocyanates are XDI, H6XDI and hydrogenated TDI. It has also been suggested to react the polyol with a diisocyanate in such amounts as to cause the polyol on each hydroxyl group to be linked with a diisocyanate and to react the polyurethane so produced, with a lactam.

The low molecular ester compounds to be empoloyed in the process according to the invention are the several mono or diesters of organic carboxylic acids with organic alcohols. A precondition in choosing the ester is that it must dissolve in the lactam to be polymerized. Suitable esters include the several aliphatic, aromatic and mixed esters whose boiling point exceeds the polymerization temperature at the polymerization pressure. Examples of suitable esters are, for instance, dimethyl terephthalate, methyl acetate, amyl acetate, ethyl propionate, ethyl butyrate and a plurality of others. It is important that the ester should not be too acidic; otherwise, it may interfere with the polymerization mechanism.

The present invention is illustrated with the following examples.

Example I

In a test tube was weighed 1.77 g of caprolactam-blocked hexamethylene diisocyanate (79 % by weight in caprolactam), 1.38 g of amyl acetate and 16.8 g of caprolactam. In an another test tube was weighed 7.45 g of lactam magnesium bromide (1 molar in caprolactam) and 14 g of caprolactam. The contents of both tubes were heated to 105 °C while being stirred and subsequently poured together and stirred. The overall composition of the mixture was 3.54 mmols of caprolactam-blocked hexamethylene diisocyanate, 10.6 mmols of amyl acetate, 7.42 mmols of lactam magnesium bromide and 327 mmols of caprolactam. A solid polyamide releasing from the wall had formed after 5 minutes and 50 seconds at 130 °C.

Example II

Analogously to Example I, a release time of 6 minutes and 45 seconds was measured using 3.54 mmols of caprolactam-blocked hexamethylene diisocyanate, 10.5 mmols of dimethyl terephthalate, 3.60 mmols of lactam magnesium bromide and 327 mmols of caprolactam at 130 °C.

Example III

Analogously to Example I, a release time of 6 minutes and 25 seconds was measured using 3.54 mmols of caprolactam-blocked hexamethylene diisocyanate, 10.5 mmols of dimethyl adipate, 7.42 mmols of lactam magnesium bromide and 327 mmols of caprolactam at 130 °C.

Example IV (comparative example without ester)

Analogously to Example I, a polymer releasing from the wall was obtained after 20 minutes using 3.54 mmols of caprolactam-blocked hexamethylene diisocyanate, 3.60 mmols of lactam magnesium bromide and 327 mmols of caprolactam at 130 °C.

Example V (comparative example without accelerator)

Analogously to Example I, a release time of 27 minutes was measured using 10.6 mmols of amyl acetate, 7.42 mmols of lactam magnesium bromide and 3.27 mmols of caprolactam at 130 °C.

As appears from the examples and comparative examples, particularly Example V, the presence of both an ester compound and an activator, such as caprolactam-blocked hexamethylene diisocyanate, is necessary.

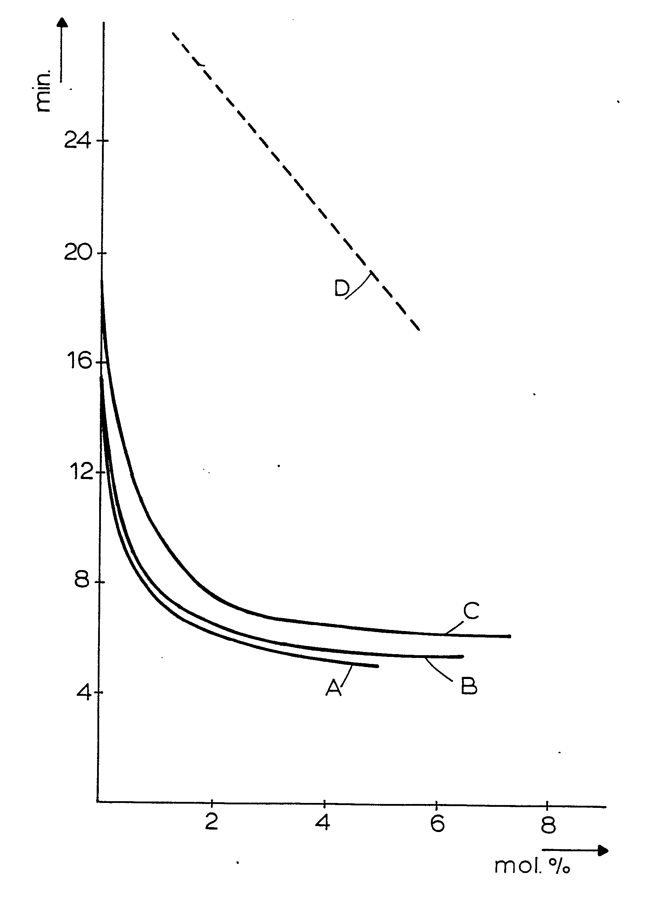

The figure shows a graphic representation of the polymerization time as a function of the amount of ester for the process as described in Example II. The vertical axis shows the time from the point at which the several components are mixed until the polyamide releases from the wall of the mould, whilst the horizontal axis shows the amount of dimethyl terephthalate (mol % relative to caprolactam). Graphs A, B and C relate to different amounts of catalyst, viz. 3, 2 and 1 mol % of lactam magnesium bromide. Graph D is comparable with Graph C except that no activator is used.

## CLAIMS

1. Process for the manufacture of a polyamide through anionically catalyzed polymerization of lactam in the presence of an alkaline metal catalyst and an activator, characterized in that the polymerization is carried out in the presence of a low molecular ester compound.

2. Process according to claim 1 characterized in that an alkaline earth metal compound is used as catalyst.

3. Process according to claim 2 characterized in that a magnesium compound is used as catalyst.

4. Process according to one of claims 1-3 characterized in that a lactam-blocked isocyanate is used as activator.

5. Process according to claim 4 characterized in that the reaction product of a polyol and a lactam-blocked diisocyanate is used as lactam-ended isocyanate.

6. Process according to one of claims 1-5 characterized in that dimethyl terephthalate is used as ester.

7. Process according to one of claims 1-6 characterized in that caprolactam is used as lactam.

8. Process substantially as described and illustrated in the examples.

9. Polyamide prepared by applying the process according to one of claims 1-8.

10. Object manufactured wholly or partly from a polyamide according to claim 9.

**0 168 854**

**European Patent Office**

**EUROPEAN SEARCH REPORT**

EP 85 20 0893

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | CHEMICAL ABSTRACTS, vol. 94, no. 8, 23rd February 1981, page 20, no. 48033f, Columbus, Ohio, US; & SU - A - 775 106 (KHAITIN, B. Sh. et al.) 30-10-1980 * Abstract * | 1-10 | C 08 G 69/20 C 08 G 69/18 |
| Y | GB-A-1 045 628 (POLYMER CO.) * The whole document * | 1-10 | |
| A | CHEMICAL ABSTRACTS, vol. 70, no. 10, 10th March 1969, page 5, no. 38167t, Columbus, Ohio, US; A.MATTIUSSI et al.: "Anionic polymerization of caprolactam: organic esters as initiators" & EUR. POLYM. J. 1968, 4(6), 695-707 * Abstract * | | |
| | | | TECHNICAL FIELDS SEARCHED (Int. Cl.4) |
| A | CHEMICAL ABSTRACTS, vol. 80, no. 4, 28th January 1974, page 22, no. 15487q, Columbus, Ohio, US; & JP - A - 72 42 759 (UNITIKA CO., LTD.) 28-10-1972 * Abstract * | | C 08 G |

The present search report has been drawn up for all claims

| Place of search | Date of completion of the search | Examiner |
|---|---|---|
| THE HAGUE | 01-10-1985 | LEROY ALAIN |